# EUROPÄISCHE PATENTSCHRIFT

(11) **EP 0 652 836 B1**
(45) Veröffentlichungstag und Bekanntmachung des Hinweises auf die Patenterteilung: **21.08.1996**
(21) Anmeldenummer: 94916213.5
(22) Anmeldetag: 07.05.1994
(51) Int. Cl.: B60M 1/18, B60M 3/04

(54) **SYSTEMTRENNSTELLE FÜR FAHRLEITUNGEN IM ELEKTRISCHEN BAHNBETRIEB**
SYSTEM SECTIONING POINT FOR ELECTRIC RAILWAY CATENARIES
POSTE DE SECTIONNEMENT DE SYSTEME POUR CATENAIRES DE CHEMINS DE FER ELECTRIQUES

(30) Priorität: 03.06.1993 DE 4318934
(43) Veröffentlichungstag der Anmeldung: 17.05.1995
(73) Patentinhaber: AEG Bahnfahrwegsysteme GmbH, 14199 Berlin (DE); SIEMENS AKTIENGESELLSCHAFT, 80333 München (DE)
(72) Erfinder: BRAUN, Erich, D-65824 Schwalbach (DE); KISTNER, Hugo, D-91341 Röttenbach (DE); KIESSLING, Friedrich, D-91083 Baiersdorf (DE); WERTH, Ludger, D-64291 Darmstadt (DE)
(74) Vertreter: Hamilton, Eberhard
(86) Internationale Anmeldenummer: EP9401465
(87) Internationale Veröffentlichungsnummer: WO9429139

(56) Entgegenhaltungen:
- US-A- 4 301 899
- ABB REVIEW, Bd.1993, Nr.4, 1. Mai 1993, BADEN (CH) Seiten 9- - 14, XP000368143 WALLOCHNY 'Innovative dual-system light rail vehicles for 15 kV, 16.7 Hz and 750 V DC'

## Beschreibung

Die Erfindung bezieht sich auf eine Systemtrennstelle für Fahrleitungen im elektrischen Bahnbetrieb, wie sie im Oberbegriff des Anspruches 1 näher bezeichnet ist.

An Ländergrenzen, aber auch Gebietsgrenzen von Bahnverwaltungen, werden grenzüberschreitende Triebfahrzeuge oft mit einander ablösenden unterschiedlichen Stromsystemen der Bahnstromversorgung konfrontiert. Diese werden dabei durch sogenannte Systemtrennstellen getrennt, die von den Fahrzeugen im allgemeinen mit abgesenktem Stromabnehmer, d.h. mit Schwung durchfahren werden, wonach nach Umschaltung wieder aufgerüstet wird.

Trotzdem ist nicht auszuschließen, daß ein Stromabnehmer durch Versagen entsprechender Einrichtungen am Fahrdraht verbleibt. Dann muß durch zusätzliche Vorkehrungen sichergestellt werden, daß dabei weder Schäden durch unzulässige Verbindung der beiden Stromsysteme über das Fahrzeug noch Schäden auf dem Fahrzeug selbst entstehen.

Die elektrische Trennung der beiden angrenzenden Oberleitungsabschnitte einerseits und ihre mechanische Verbindung andererseits erfolgt häufig durch geerdete Schutzstrecken, was die widerstandslose Verbindung der Schutzstrecken mit den dazu zugehörigen Erdungssystemen erfordert. Bei solchen Anordnungen erfolgt bei einer Einfahrt in die Schutzstrecke mit hochgestelltem Stromabnehmer ein satter Kurzschluß im speisenden Versorgungsnetz des Stromsystems I und anschließende beim
Verlassen der Schutzstrecke im nachfolgenden Stromsystem II. Dies bewirkt zwar sofortige Auslösung der dazugehörigen Leistungsschalter in den betreffenden Unterwerken und führt auch zur Stillsetzung des Triebfahrzeuges durch Unterspannungsauslösung seines Leistungsschalters, nachteilig ist jedoch, daß die Oberleitungs- und Stromversorgungsanlagen durch die hohen Stromstärken im Kurzschlußfall extrem stark beansprucht werden.

Aufgabe der Erfindung ist es, eine einfache Ausführung der Systemtrennstelle zu schaffen, die bei höherer Sicherheit solche Kurzschlüsse der Systeme durch das Fahrzeug praktisch ausschaltet.

Die vorgenannte Aufgabe wird gemäß den kennzeichnenden Merkmalen des Anspruches 1 gelöst. Vorteilhafte Ausgestaltungen sind den Unteransprüchen entnehmbar.

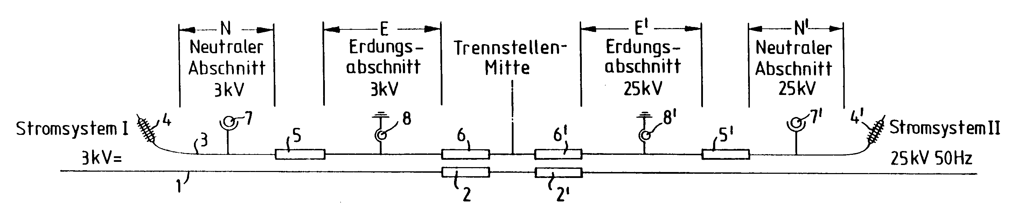

Anhand eines schematischen in der Zeichnung dargestellten Ausführungsbeispieles wird die Erfindung im nachstehenden näher erläutert.

Die Figur zeigt eine Systemtrennstelle für eine Hauptfahrleitung 1, in die - potentialgetrennt durch zwei Isolierstäbe 2, 2' als Isoliermittel - auf einer Seite z.B. mit 3 kV = und auf der anderen Seite z.B. mit 25 kV, 50 Hz eingespeist wird. Im Trennstellenbereich ist im geringen Abstand zur Hauptfahrleitung 1 eine Hilfsfahrleitung 3 so installiert, daß beide Fahrleitungen 1 und 3 gleichzeitig vom Schleifstück eines Fahrzeugstromabnehmers bestrichen und damit elektrisch verbunden (überbückt) werden können. Die Hilfsfahrleitung 3 ist im Normalfall spannungslos über Isolatoren 4 aufgehängt und durch Isolierstäbe 5, 5' und 6, 6' als Isolationsmittel in Abschnitte unterteilt. Von diesen Abschnitten sind spiegelbildlich jeweils die äußeren Abschnitte N und N', das sind neutrale im Normalfall spannungslose Abschnitte, die durch Spannungswandler 7, 7' ständig auf Spannungsfreiheit kontrolliert werden. Die inneren Abschnitte E und E'sind geerdete Abschnitte, die durch Stromwandler 8, 8' auf Kurzschlußstrom überwacht werden.

Wird z.B. die dargestellte Systemtrennstelle von links befahren und ein aufgestellter Stromabnehmer überbrückt Hauptfahrleitung 1 und Hilfsfahrleitung 3, dann steht zunächst am neutralen Abschnitt N die Betriebsspannung 3 kV = an und ein Signal des Spannungswandlers 7 kann zur unverzüglichen Auslösung der Streckenschalter (Leistungsschalter) in den Unterwerken der beiden Stromsysteme I und II verwertet werden. Zeitlich verzögert durch den räumlichen Versatz des nachfolgenden Erdungsabschnittes E, d.h. durch die erst nachfolgende Überbrückung des Streckenabschnittes E durch den Stromabnehmer, erfolgt unterstützend noch eine zusätzliche Kurzschlußstromüberwachung. Normalerweise brauchen die Stromwandler 8, 8' jedoch nicht mehr ansprechen, weil die Systeme I und II bereits abgeschaltet wurden.

Durch die Aufteilung der Systemtrennstelle stehen im Störfall jetzt von den Wandlern 7, 7' und 8, 8' abgeleitet folgende Störgrößen für eine unverzügliche Auslösung der Leistungsschalter in den Unterwerken zur Verfügung:
1. Spannung des Systems I
2. Kurzschlußstrom des Systems I
3. Kurzschlußstrom des Systems II
4. Spannung des Systems II
Für eine schnelle Übertragung der Ausschaltsignale zu den Unterwerken können bekannte Übertragungsverfahren verwendet werden.

Die Erfindung ist nicht auf das dargestellte Beispiel beschränkt. Erfaßt werden sollen auch Anordnungen, die z.B. das umgekehrte Prinzip verwenden, indem im Bereich der Systemtrennstelle ein Teil der dann spannungslosen Hauptfahrleitung 1 in mehrere Abschnitte unterteilt und durch Strom- und Spannungswandler überwacht wird, wobei die Spannungszuführung im Störfall über den Stromabnehmer von der danebenliegenden spannungsführenden Hilfsfahrleitung 3 übertragen wird.

## Patentansprüche

1. Systemtrennstelle für Fahrleitungen im elektrischen Bahnbetrieb, die aneinandergrenzende Fahrleitungsstrecken verschiedener Strom- und/oder Spannungssysteme mechanisch verbindet, jedoch potentialmäßig trennt und unter Anwendung von Kurzschluß-Auslösesystemen in geerdeten Schutzstreckenabschnitten für eine Auslösung der benachbarten Streckenschalter der Systeme sorgt, insbesondere zum Schutz beim Befahren mit versehentlich angehobenen Stromabnehmer,
**dadurch gekennzeichnet,**
daß dem jeweiligen Kurzschlußauslösesystem (8 bzw. 8') im Erdungsabschnitt (E bzw. E') eine Spannungsüberwachung (7 bzw. 7') mit räumlich und zeitlich früherer Auslösung vorgeschaltet ist, die das Auftreten einer Systemspannung (I bzw. II) prüft.

2. Systemtrennstelle nach Anspruch 1,
**dadurch gekennzeichnet,**
daß eine im Trennstellenbereich neben der spannungsführenden Hauptfahrleitung (1) angeordnete und im Normalbetrieb neutrale Hilfsfahrleitung (3) Verwendung findet, die vom Stromabnehmer eines Triebsfahrzeuges mitbestrichen und abschnittsweise durch Überbrücken unter Spannung gesetzt wird, was von der Spannungsüberwachung (7 bzw. 7') vorzeitig erfaßbar ist.

3. Systemtrennstelle nach Anspruch 1 oder 2,
**dadurch gekennzeichnet,**
daß die Hilfsfahrleitung (3) von der Trennstellenmitte gesehen spiegelbildlich zu beiden Seiten jeweils einen durch Isolationsmittel (6, 5, 4 bzw. 6', 5', 4') abgegrenzten geerdeten Abschnitt (E bzw. E') mit Stromwandler (8 bzw. 8') und einen neutralen Abschnitt (N bzw. N') mit Spannungswandler (7 bzw. 7') ausweist.

4. Systemtrennstelle nach den Ansprüchen 1 bis 3,
**dadurch gekennzeichnet,**
daß bei Überbrückung durch einen Stromabnehmer für jede Fahrtrichtung zunächst ein Spannungswandler (7 bzw. 7') in einem neutralen Abschnitt (N bzw. N') anspricht und die Streckenschalter für die Speisung des gerade befahrenen Streckenabschnittes des einen Systems (I) und der anschließend zu befahrenen Fahrleitungsstrecke des anderen Systems (II) auslöst, bevor die jeweilige Stromüberwachung (8 bzw. 8') wirksam wird.

5. Systemtrennstelle nach einem der vorhergehenden Ansprüche,
**dadurch gekennzeichnet,**
daß in Umkehrung des Prinzips im Trennstellenbereich die Hauptfahrleitung (1) neutral und die daneben angeordnete Hilfsfahrleitung (3) spannungsführend ausgebildet ist, und daß dementsprechend die Hauptfahrleitung (1) in neutrale (N) und geerdete Abschnitte (E) unterteilt wird, auf die durch aufeinanderfolgende Überbrückung durch den Stromabnehmer auswertbare Spannungen und Kurzschlußströme übertragbar sind.

## Claims

1. System divide point for overhead lines in electric railways, which mechanically connects, but separates in terms of potential, the mutually adjoining overhead line sections of different current and/or voltage systems and, with use of short-circuit trip systems in earthed protective path sections, provides for a tripping of the adjacent section circuitbreakers of the systems, especially for protection in the case of travel with inadvertently raised current collector, characterised thereby that a respective voltage monitoring device (7 or 7') with earlier tripping in terms of space and time is connected in front of each short-circuit tripping system (8 or 8') in the earthing section (E or E') and checks the occurrence of a system voltage (I or II).

2. System divide point according to claim 1, characterised thereby that there is used an auxiliary overhead line (3) which is arranged in the divide point region near the voltage-conducting main overhead line (1), is neutral in normal operation, is wiped by the current collector of a rail vehicle and is subjected section-by-section to voltage, which is detectable in advance by the voltage monitoring device (7 or 7'), by bridging over.

3. System divide point according to claim 1 or 2, characterised thereby that the auxiliary overhead line (3) comprises, in mirror image to both sides as seen from the divide point centre, each time an earthed section (E or E'), which is delimited by insulating means (6, 5, 4 or 6', 5', 4'), with a current transformer (8 or 8') and a neutral section (N or N') with a voltage transformer (7 or 7').

4. System divide point according to claims 1 to 3, characterised thereby that in the case of bridging over by a current collector, for each travel direction initially a voltage transformer (7 or 7') in a neutral section (N or N') responds and the section circuitbreaker for the suppply of the path section, which has just been driven over, of the one system (I) and the overhead line path, which is subsequently to be driven over, of the other system (II) trips before the respective current monitoring (8 or 8') is effective.

5. System divide point according to one of the preceding claims, characterised thereby that, in inversion of the principle, in the divide point region the main overhead line (1) is constructed to be neutral and the adjacently arranged auxiliary overhead line (3) is constructed to be voltage-conducting, and that correspondingly the main overhead line (1) is divided up into neutral (N) and earthed sections (E) to which evaluatable voltages and short circuit currents are transmissible by successive bridging over by the current collector.

## Revendications

1. Point de sectionnement de système pour des caténaires dans l'exploitation de chemin de fer électrique, qui relie mécaniquement des tronçons de caténaires limitrophes les uns des autres de différents systèmes de courant et/ou de tension, cependant, sépare au point de vue potentiel, et, avec emploi de systèmes de déclenchement de court-circuit, dans des sections de tronçon de protection mis à la terre, se charge d'un déclenchement des interrupteurs de tronçons voisins des systèmes, en particulier, pour la protection lors du parcours avec des dispositifs préleveurs de courant relevés par inadvertance,
caractérisé en ce,
qu'en amont de chaque système de déclenchement de court-circuit (8 ou bien 8'), dans la section de mise à la terre (E ou bien E'), est disposée une surveillance de tension (7 ou bien 7'), avec déclenchement spatial et/ou anticipé dans le temps, qui vérifie la survenue d'une tension de système (I ou II).

2. Point de sectionnement de système selon la revendication 1,
caractérisé en ce,
qu'une caténaire auxiliaire (3), agencée dans la région de point de sectionnement à côté de la caténaire principale (1) conduisant la tension et neutre dans l'exploitation normale, trouve emploi, qui est cobalayé par le dispositif préleveur de courant d'un véhicule moteur et, par section, est mise sous tension par des pontages, ce qui est susceptible d'être détecté de façon anticipée par la surveillance de tension (7 ou bien 7').

3. Point de sectionnement de système selon la revendication 1 ou la revendication 2,
caractérisé en ce,
que la caténaire auxiliaire (3), vue à la façon d'une image reflétée par un miroir à partir du milieu de point de sectionnement, présente aux deux côtés, chaque fois, une section (E ou bien E') mise à la terre, limitée par des moyens d'isolation (6, 5, 4 ou bien 6', 5', 4'), avec des convertisseurs de courant (8 ou bien 8'), et une section (N ou bien N') neutre, avec des convertisseurs de tension (7 ou bien 7').

4. Point de sectionnement de système selon les revendications 1 à 3,
caractérisé en ce,
que lors de pontage par un dispositif préleveur de courant, pour chaque sens de déplacement, d'abord, un convertisseur de tension (7 ou bien 7'), dans une section (N ou bien N') neutre, réagit et déclenche les interrupteurs de tronçon pour l'alimentation de la section de tronçon parcourue rectiligne de l'un des systèmes (I) et du tronçon de caténaire à parcourir consécutivement de l'autre système (II), avant, chaque fois, que la surveillance de courant (8 ou bien 8') devienne efficace.

5. Point de sectionnement de système selon une des précédentes revendications,
caractérisé en ce,
qu'en inversion du principe, dans la région de point de sectionnement, la caténaire principale (1) est constituée neutre et la caténaire auxiliaire (3) agencée à côté de celle-ci est constituée conduisant la tension, et en ce que, par conséquent, la caténaire principale (1) devient subdivisée en des sections neutres (N) et des sections mises à la terre (E), sur lesquelles, par des pontages se suivant les uns les autres, par le dispositif préleveur de courant, des tensions susceptibles d'être évaluées et des courants de court-circuit sont susceptibles d'être transmis.
